# EUROPÄISCHE PATENTSCHRIFT

(11) **EP 1 706 299 B1**
(45) Veröffentlichungstag und Bekanntmachung des Hinweises auf die Patenterteilung: **16.09.2009**
(21) Anmeldenummer: 05715636.6
(22) Anmeldetag: 01.03.2005
(51) Int. Cl.: B60T 7/12, B60K 17/26

(54) **LEISTUNGS ÜBERTRAGUNGSEINHEIT**
POWER TRANSMISSION UNIT
UNITE DE TRANSMISSION DE PUISSANCE

(30) Priorität: 05.03.2004 DE 102004010855
(43) Veröffentlichungstag der Anmeldung: 04.10.2006
(73) Patentinhaber: Voith Turbo GmbH & Co. KG, 89522 Heidenheim (DE)
(72) Erfinder: BECKE, Martin, 89075 Ulm (DE)
(74) Vertreter: Weitzel, Wolfgang
(86) Internationale Anmeldenummer: PCT/EP2005/002146
(87) Internationale Veröffentlichungsnummer: WO 2005/085029

(56) Entgegenhaltungen:
- EP-A- 0 781 946
- US-A- 4 648 289
- US-A- 5 820 515
- US-B1- 6 411 881

## Beschreibung

Die Erfindung betrifft eine Leistungsübertragungseinheit, im einzelnen mit den Merkmalen aus dem Oberbegriff des Anspruchs 1.

Leistungsübertragungseinheiten, umfassend wenigstens einen Eingang und einen Ausgang sowie ein dazwischen angeordnetes Anfahrelement und ein diesem nachgeschaltetes Getriebe sind in einer Vielzahl von Ausführungen vorbekannt. Dabei können die Anfahrelemente beliebig ausgeführt sein. Diese können als verschleißfreie Anfahrelemente, beispielsweise in Form hydrodynamischer Komponenten oder aber als reibschlüssig arbeitende Anfahrelemente ausgebildet sein. Auch für die konkrete konstruktive Ausgestaltung des Getriebes bestehen eine Mehrzahl von Möglichkeiten. Dieses kann als stufenloses Getriebe oder aber in Form eines Schaltgetriebes, umfassend wenigstens eine Schaltstufe, ausgebildet sein. Derartige Leistungsübertragungseinheiten werden in Antriebssträngen für Fahrzeuge eingesetzt, wobei der Eingang wenigstens mittelbar, d. h. direkt oder indirekt mit einer Antriebsmaschine verbindbar ist, während der Ausgang wenigstens mittelbar drehfest mit den anzutreibenden Rädern gekoppelt ist. Aufgrund der Anordnung im Leistungsfluss zwischen Antriebsmaschine und den Rädern ist die Einleitung des Leistungsflusses sowohl vom Eingang der Leistungsübertragungseinheit, d. h. von Seiten der Antriebsmaschine her möglich als auch im Schubbetrieb über die Räder als auch beispielsweise beim unerwünschten Rückwärtsrollen während eines Anfahrvorganges am Berg Dies ist insbesondere dann der Fall, wenn unerwünscht ein Rückrollen des Fahrzeuges während eines Anfahrvorganges erfolgt. Dieses Rückrollen wird in der Regel durch die Aktivierung zusätzlich dafür vorgesehener Bremseinrichtungen verhindert. Diese sind beispielsweise in Form sogenannter Feststellbremseinrichtungen, beispielsweise im Pkw in Form von Handbremseinrichtungen ausgeführt. Um ein unerwünschtes Zurückbewegen des Fahrzeuges sicher zu verhindern und einen reibungslosen Anfahrvorgang zu gewährleisten, sind eine Reihe von Maßnahmen bekannt, die insbesondere beim Anfahren am Berg die Freigabe der Bremseinrichtungen betreffen. So werden beispielsweise die Feststellbremseinrichtungen gemäß DE 44 21 088 erst nach Vorliegen bestimmter Bedingungen gelöst. Dies bedingt jedoch einen erheblichen zusätzlichen steuerungstechnischen Aufwand sowie ferner ein zusätzliches Element zur Realisierung der Feststell- bzw. Haltefunktion bzw. der Verhinderung eines unerwünschten Rückrollens.

Das gattungsgemäße Dokument US 5 820 515 beschreibt ein Steuerungssystem für ein Automatikgetriebe mit einer drehrichtungsgeschalteten Kupplung. Weiterhin umfasst das Automatikgetriebe einen Rückwärtsgang, welcher als Kupplung ausgeführt ist, wobei die drehrichtungsgeschaltete Kupplung in Leistungsübertragungsrichtung von einem Eingang zu einem Ausgang hinter dem Rückwärtsgang angeordnet ist.

Der Erfindung liegt daher die Aufgabe zugrunde, eine Rückrollverhinderung für Antriebsstränge für den Einsatz in Fahrzeugen der eingangs genannten Art mit integrierter Leistungsübertragungseinheit derart zu schaffen, dass diese Nachteile vermieden werden und auf einfache Art und Weise ein unerwünschtes Zurückrollen, insbesondere beim Anfahren am Berg sicher vermieden wird, wobei diese Verhinderung möglichst nicht mehr abhängig von zu erfassenden und auszuwertenden Istwerten steuerungstechnisch erfolgen muss.

Die erfindungsgemäße Lösung ist durch die Merkmale des Anspruchs 1 charakterisiert. Vorteilhafte Ausgestaltungen sind in den Unteransprüchen beschrieben.

Erfindungsgemäß umfasst die Leistungsübertragungseinheit ein Anfahrelement und ein diesem nachgeschaltetes Getriebe, wobei in Leistungsübertragungsrichtung vom Eingang der Leistungsübertragungseinheit zum Ausgang der Leistungsübertragungseinheit betrachtet zwischen dem Ausgang des Anfahrelementes und dem Ausgang des Getriebes eine Rückrollverhinderungseinrichtung in Form eines Freilaufes vorgesehen ist, der zwischen einem in diesem Bereich angeordneten Leistung übertragenden oder mit einem mit dem leistungsübertragenden Element drehfest verbundenen Element und einem zumindest zeitweise ortsfesten Bauelement oder dem Gehäuse angeordnet ist. Gemäß einer besonders vorteilhaften Ausführung umfasst das Getriebe eine Einrichtung zur Fahrtrichtungsumkehr. Der Freilauf wird dabei an einem rotierenden Element im Leistungsfluss zwischen dem Ausgang des Anfahrelementes und der Einrichtung zur Fahrtrichtungsumkehr angeordnet.

Der Freilauf ist als drehrichtungsgeschaltete Kupplung ausgebildet, wobei die Ausbildung derart erfolgt, dass diese geeignet ist, bei Leistungsübertragung vom

Eingang zum Ausgang der Leistungsübertragungseinrichtung betrachtet, keinen Einfluss auf diese auszuüben, d. h. frei zu laufen und damit keine Kopplung zwischen einzelnen Elementen zu realisieren und bei Leistungseinleitung vom Ausgang zum Eingang der Leistungsübertragungsbaueinheit betrachtet eine Sperrwirkung zu erzielen, d. h. eine Kopplung zwischen dem rotierenden Element im Leistungsfluss und einem ortsfesten Element bzw. dem Gehäuse. Im ersten Fall fungiert der Freilauf sozusagen quasi als Überholkupplung, während im zweiten Fall der Freilauf die Funktion einer Kupplung übernimmt, wobei die Kopplung an ein Element mit Drehzahl n = 0 erfolgt. Dadurch kann das Fahrzeug selbst bei geöffnetem Anfahrelement, d. h. deaktiviertem Anfahrelement, beim Anfahren nicht mehr entgegen der mittels dem eingelegten Gang gewählten Fahrtrichtung zurückrollen.

Bezüglich der Anordnung des Freilaufes bzw. der drehrichtungsgeschalteten Kupplung zwischen dem rotierenden Element im Leistungsübertragungsbereich zwischen dem Anfahrelement und der Einrichtung zu Fahrtrichtungsumkehr und dem ortsfesten Element bzw. Gehäuse bestehen eine Vielzahl von Möglichkeiten. Die Kopplung des Freilaufes kann dabei, wie bereits ausgeführt, an beliebiger Stelle erfolgen, wobei diese mit dem Ausgang des Anfahrelementes, dem Eingang des Getriebes bzw. einem Ort beliebiger Stelle im Getriebe erfolgen kann.

Das Getriebe selbst kann ebenfalls vielgestaltig ausgeführt sein. Dies kann in Vorgelegebauweise als Planetenradgetriebe oder kombiniertes Planeten-Stirnradgetriebe zur Realisierung einzelner Gangstufen oder als stufenloses Getriebe ausgeführt sein. Bei Ausbildung in Vorgelegebauweise umfasst dieses ein erstes Vorgelege, welches den Ausgang des Anfahrelementes mit dem Ausgang der Leistungsübertragungseinheit über eine Vorgelegewelle und über mit diesen koppelbaren, die Schaltstufen charakterisierenden weiteren Vorgelegen verbindet. Dabei sind den einzelnen Vorgelege, die die einzelnen Gangstufen charakterisieren, Schaltelemente zugeordnet, die je nach Anordnung entweder das Vorgelege direkt mit dem Ausgang bzw. einer mit diesem gekoppelten Welle oder einem rotierenden Bauelement verbinden oder aber eine Verbindung des die jeweilige Gangstufe realisierenden Vorgeleges mit der parallel zum Anfahrelement angeordneten Vorgelegewelle. Bei Zuordnung der Schaltelemente zur mit dem Ausgang der Leistungsübertragungseinheit gekoppelten Welle ist dabei eine Anordnung an beliebiger Stelle in axialer Richtung an der Vorgelegewelle möglich. Diese kann vor oder hinter den die einzelnen Gangstufen realisierenden Vorgelegen erfolgen oder aber zwischen den einzelnen Vorgelegen.

Gemäß einer besonders vorteilhaften Weiterentwicklung ist der Freilauf vorzugsweise schaltbar ausgeführt. Damit kann eine Abschaltung der Rückrollverhinderungseinrichtung ermöglicht werden, die das Freischaukeln des Fahrzeuges zulässt. Die Abstützung der drehrichtungsgeschalteten Kupplung am ortsfesten Gehäuse oder an der jeweiligen Welle bzw. dem rotierenden Bauelement im Leistungsfluss in schaltbarer Form erfolgt dabei form- oder kraftschlüssig. Die konkrete Wahl hängt dabei von den Erfordernissen des Einsatzfalles ab und liegt im Ermessen des Fachmannes. Das Freischaukeln ist immer dann erforderlich, wenn sich das Fahrzeug beispielsweise in Schnee oder Dreck festgefahren hat und durch ein wechselweises Anfahren und Zurückrollen in Schwung versetzt werden soll, um aus dieser Situation herauszukommen. Im Getriebe wird dabei die Fahrtrichtung nicht umgeschaltet. Zum Zurückrollen wird lediglich die Anfahrkupplung geöffnet.

Bezüglich der Ausführung des Anfahrelementes sind viele Möglichkeiten denkbar. Dieses kann als verschleißfreies Anfahrelement oder aber verschleißbehaftetes Anfahrelement ausgeführt sein. Im erstgenannten Fall werden vorzugsweise hydrodynamische Komponenten gewählt, die als hydrodynamische Kupplungen, umfassend mindestens ein Primärschaufelrad und ein Sekundärschaufelrad, vorliegen. Ausführungen als hydrodynamische Drehzahl-/Drehmomentenwandler sind ebenfalls denkbar. In diesem Fall ist zusätzlich wenigstens ein Leitrad vorgesehen. Verschleißbehaftete Lösungen liegen in der Regel als nass laufende oder trocken laufende Lamellenkupplungen oder einfache Scheibenkupplungen vor. Andere Möglichkeiten für die Ausgestaltung der Anfahrelemente sind ebenfalls denkbar. Beispielsweise wird auf elektrische oder hydrostatische Lösungen verwiesen.

Dem Anfahrelement selbst kann auch eine Einrichtung zur Überbrückung zugeordnet sein, d. h. der Eingang und der Ausgang des Anfahrelementes werden starr miteinander gekoppelt. Die Einheit aus Anfahrelement und Überbrückungseinrichtung bildet dabei eine Anfahreinheit, wobei für die Anordnung des Freilaufes das gleiche gilt wie für das Anfahrelement. Dabei erfolgt jedoch die Anbindung des Freilaufes an den Ausgang des Anfahrelementes hinter dem Bereich, der zur drehfesten Kopplung mit dem Eingang vorgesehen ist.

Die erfindungsgemäße Lösung wird nachfolgend anhand von Figuren erläutert. Darin ist im einzelnen folgendes dargestellt:
- Figur 1: verdeutlicht in schematisch stark vereinfachter Darstellung den Grundaufbau einer Leistungsübertragungseinheit beim Einsatz in Fahrzeugen mit erfindungsgemäßer Anordnung einer drehrichtungsgeschalteten Kupplung;
- Figur 2: verdeutlicht in schematisch stark vereinfachter Darstellung den Aufbau einer erfindungsgemäß gestalteten drehrichtungsgeschalteten Kupplung;
- Figuren 3a und 3b: verdeutlichen mögliche Anordnungen in einer Leistungsübertragungseinheit;
- Figuren 4a und 4b: verdeutlichen mögliche Anordnungen einer drehrichtungsgeschalteten Kupplung in einer Leistungsübertragungseinheit mit einem Getriebe in Vorgelegebauweise;
- Figuren 5a und 5b: verdeutlichen mögliche Ausgestaltungen des Anfahrelementes.

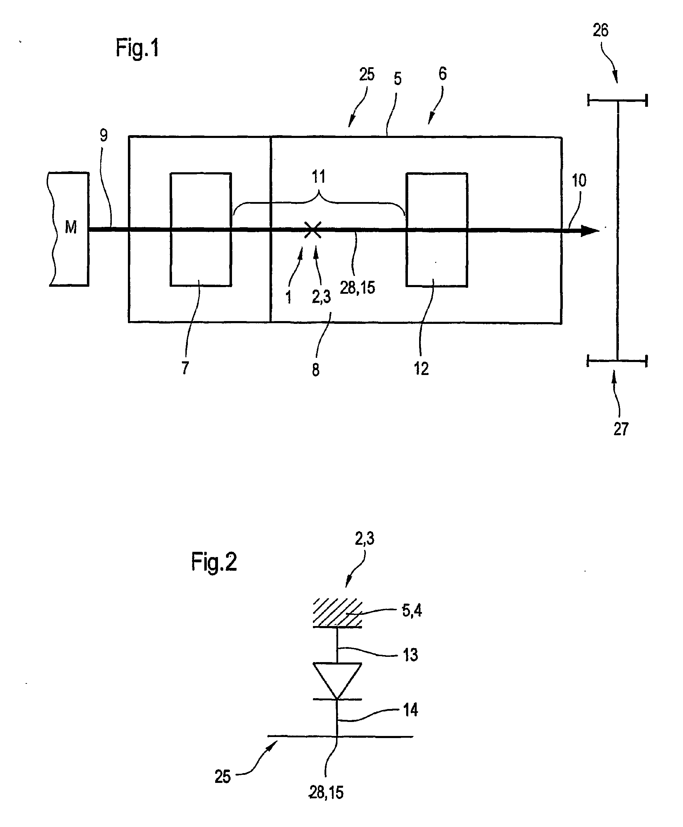

Die Figur 1 verdeutlicht in schematisch stark vereinfachter Darstellung die erfindungsgemäße Anordnung einer Rückrollverhinderungseinrichtung 1 in Form eines Freilaufes 2, welcher als drehrichtungsgeschaltete Kupplung 3 ausgeführt ist und sich an einem ortsfesten Bauteil 4 oder am Gehäuse 5 einer Leistungsübertragungseinheit 6 abstützt in einem hier nur stark schematisiert angedeuteten Antriebstrang 25 eines Fahrzeuges 26. Die Leistungsübertragungseinheit 6 umfasst ein Anfahrelement 7 sowie ein diesem nachgeschaltetes Getriebe 8. Das Anfahrelement 7 kann verschiedenartig ausgeführt sein. Dieses kann beispielsweise als hydrodynamische Komponente in Form eines hydrodynamischen Wandlers oder einer hydrodynamischen Kupplung, einer nassen oder trockenen Reibkupplung oder einer elektrischen Komponente ausgeführt sein. Andere Möglichkeiten sind denkbar. Das Getriebe 8 umfasst in der Regel Drehzahl/Drehmomentenwandlungseinrichtungen, die als stufenlose Getriebe oder aber in Form von Schaltstufen vorliegen können. Die Leistungsübertragungseinheit 6 umfasst dabei wenigstens einen Eingang 9 und einen Ausgang 10. Der Eingang 9 ist mit einer Antriebsmaschine M wenigstens mittelbar, d. h. direkt oder über weitere Übertragungseinrichtungen koppelbar, während der Ausgang 10 für den Einsatz in Fahrzeugen 26 mit den anzutreibenden Rädern 27, wenigstens mittelbar, d. h. direkt oder indirekt über weitere Leistungsübertragungseinrichtungen verbunden ist. Die Rückrollverhinderungseinrichtung 1 in Form der drehrichtungsgeschalteten Kupplung 3 ist dabei erfindungsgemäß zwischen dem Ausgang des Anfahrelementes 7 und dem Ausgang 10 der Leistungsübertragungseinheit 6 angeordnet. Gemäß einer besonders vorteilhaften Ausgestaltung in der Figur 1 erfolgt die Anordnung in einem Bereich 11 des Leistungsflusses zwischen dem Anfahrelement 7 und einer Einrichtung 12 zur Fahrtrichtungsumkehr. Die Einrichtung zur Fahrtrichtungsumkehr 12 kann vielgestaltig ausgeführt sein. Im einfachsten Fall ist diese in Form eines Wendeschaltsatzes ausgeführt. Denkbar ist jedoch auch, insbesondere bei Ausführung in Form von Planetenradgetrieben, die Zuordnung entsprechender Schaltelemente und deren abgestimmte Betätigung zu einzelnen Getriebeelementen des Planetengetriebes. In diesem Fall müsste die Anordnung in Leistungsflussrichtung vom Eingang 9 zum Ausgang 10 betrachtet, vor der Wirkung dieser Schaltelemente erfolgen.

Als drehrichtungsgeschaltete Kupplung 3 wird der Freilauf 2 im Bereich 11 zwischen einem ortsfesten Bauelement 4 oder dem Gehäuse 5 und einem im Leistungsfluss in der Leistungsübertragungseinheit 6 liegenden Leistung übertragenden und während der Leistungsübertragung rotierenden Element 28 oder einem drehfest mit diesen gekoppelten Element angeordnet.

Die Figur 2 verdeutlicht in schematisch vereinfachter Darstellung den Grundaufbau der drehrichtungsgeschalteten Kupplung 3 in Form des Freilaufes 2. Dieser umfasst dabei ein erstes, gegenüber dem Gehäuse 5 oder einem anderen ortsfesten Bauteil 4 abstützbares oder sich abstützendes Kupplungselement 13 und ein zweites drehfest mit dem Antriebsstrang 25, insbesondere im Bereich 11 des Leistungsflusses zwischen dem Anfahrelement 7 und der Einrichtung zur Fahrtrichtungsumkehr 12 verbundenes oder verbindbares zweites Kupplungselement 14. Erstes und zweites Kupplungselement 13, 14 sind über form- oder kraftschlüssig wirkende Mitnahmeelemente miteinander drehfest verbindbar. Die Mitnahmeelemente sind derart ausgeführt und angeordnet, dass eine Kopplung zwischen erstem und zweitem Kupplungselement 13, 14 nur in einer Rotationsrichtung erfolgt. Dabei ist bei feststehendem erstem Kupplungselement 13 dies die Rotationsrichtung des leistungsübertragenden und rotierenden Bauteiles zwischen Anfahrelement 7 und Einrichtung 12 zur Fahrtrichtungsumkehr. Die Mitnahmeelemente können verschiedenartig ausgeführt sein, beispielsweise als schräg ausgerichtete Klauen oder Verzahnungen. Des weiteren können diese zusätzlichen Elemente wie Rollen oder zylindrische Elemente umfassend die in einer Rotationsrichtung das zweite 14 gegenüber dem ersten Kupplungselement 13 verklemmen. Der Freilauf 2 ermöglicht als richtungsgeschaltete Kupplung im wesentlichen die zwei folgenden Funktionszustände:
1. Funktion als Überholkupplung, d. h. keine Wirkung des Freilaufes 2 bei Einleitung des Momentes bzw. Momentenfluss vom Eingang 9 zum Ausgang 10 der Leistungsübertragungseinheit 6 betrachtet. Die Drehzahl am ersten Kupplungselement 13 ist gleich null oder zumindest bei Abstützung über eine Bremseinrichtung an einem Gehäuse 5 kleiner als die Drehzahl des zweiten drehfest mit einem rotierenden, leistungsübertragenden Element 28 im Bereich 11 des Leistungsflusses verbundenen zweiten Kupplungselementes 14. Das zweite Kupplungselement 14 läuft frei.
2. Einleitung eines Momentes von den Rädern beim Rückrollen in den Antriebsstrang 25 führt zur Wirkverbindung zwischen erstem und zweitem Kupplungselement 13 und 14, wodurch aufgrund des Form- oder Kraftschlusses und der Abstützung des ersten Kupplungselementes 13 an einem ortsfesten Bauteil 4 oder einem Gehäuse 5 eine Kopplung zwischen diesem und dem Antriebsstrang 25, insbesondere dem Bereich 11 der Leistungsübertragungseinheit 6 bzw. des Getriebes 8, erzielt wird, die zu einem Festsetzen des Ausgang 10 der Leistungsübertragungseinheit 6 bzw. den mit diesen wenigstens mittelbar gekoppelten Rädern zum Einsatz in Fahrzeugen führt.

Mit der erfindungsgemäßen Lösung wird eine Welle oder ein anderes im Leistungsfluss liegendes bzw. mit einem im Leistungsfluss liegendem drehfest gekoppelten Element 15 rotierendes Element in einem Antriebsstrang 15, das beim Fahren im Leistungsfluss im Traktionsbetrieb zwischen dem Anfahrelement 7 und einer Stelle liegt, an der die Fahrtrichtungsumkehr, d. h. die Einrichtung zur Fahrtrichtungsumkehr 12 angeordnet ist und somit eine Umschaltung zwischen Vorwärts- und Rückwärtsgang ermöglicht, am Drehen entgegen der durch die Drehrichtung der Antriebsmaschine M, insbesondere Motordrehrichtung vorgegebenen Richtung gehindert. Die Abstützung des Freilaufes 2, insbesondere der drehrichtungsgeschalteten Kupplung 3, die die Rückrollverhinderungseinrichtung 1 bildet, erfolgt vorzugsweise direkt an einem ortsfesten Bauteil 4 oder dem Gehäuse 5 der Leistungsübertragungseinheit 6. Diese kann jedoch auch über eine separate Bremseinrichtung, die zwischen dem ersten Kupplungselement 13 und dem Gehäuse 5 angeordnet ist und ebenfalls ein Festsetzen bewirkt, realisiert werden.

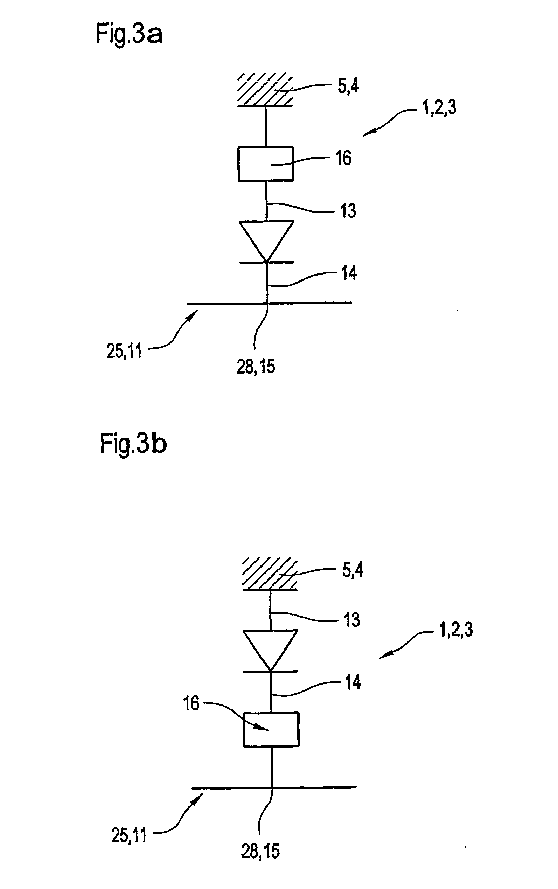

Die Abstützung bzw. Verbindung der drehrichtungsgeschalteten Kupplung 3 am ortsfesten Bauteil 4 oder dem Gehäuse 5 oder aber der WeHe bzw. dem rotierenden im Leistungsfluss liegenden oder mit diesem drehfest gekoppelten Bauelement 28 bzw. 15 kann jeweils auch schaltbar ausgeführt sein, wobei diese Schaltbarkeit durch Form- oder Reibschluss realisiert wird. Diesbezüglich verdeutlichen die Figuren 3a und 3b in schematisch stark vereinfachter Darstellung anhand einer Blackbox die Möglichkeiten der Anordnung von Mitteln zur Kopplung bzw. Entkopplung 16a des Freilaufes 2 bzw. der drehrichtungsgeschalteten Kupplung 3 vom Gehäuse 5 oder dem ortsfesten Bauteil 4 oder aber 16b zur Entkopplung von einer Welle bzw. einem rotierenden im Leistungsfluss liegenden Element 28 oder mit diesem drehfest gekoppelten Bauelement 15 im Bereich der Leistungsübertragung 11, d. h. zwischen dem Anfahrelement 7 und der Einrichtung 12 zur Fahrtrichtungsumkehr. Dadurch kann die durch die Drehrichtung geschaltete Kupplung 3 bzw. den Freilauf 2 gebildete Rückrollverhinderungseinrichtung 1 bei Bedarf abgeschaltet, d. h. deaktiviert werden. Eine abgeschaltete Rückrollverhinderungseinrichtung wiederum ermöglicht das Freischaukeln des Fahrzeuges, wobei darunter der Zustand durch Schwungholens verstanden wird, beispielsweise nach einem Festfahren durch Wechsel zwischen Anfahren und Zurückrollen lassen sowie erneutem Anfahren und Zurückrollenlassen, um beispielsweise aus einer Kuhle oder aus dem festgefahrenen Zustand herauszukommen. Im Getriebe 8 wird dabei die Fahrtrichtung nicht umgeschaltet. Zum Zurückrollen in diesem Zustand muss lediglich nur das Anfahrelement 7 geöffnet werden. Die erfindungsgemäße Lösung ermöglicht es ferner, dass das Fahrzeug bei geöffnetem Anfahrelement 7 beim Anfahren nicht mehr entgegen der mittels eingelegtem Gang gewählten Fahrtrichtung zurückrollen kann. Dies ist insbesondere für Anfahrvorgänge am Berg sehr sinnvoll.

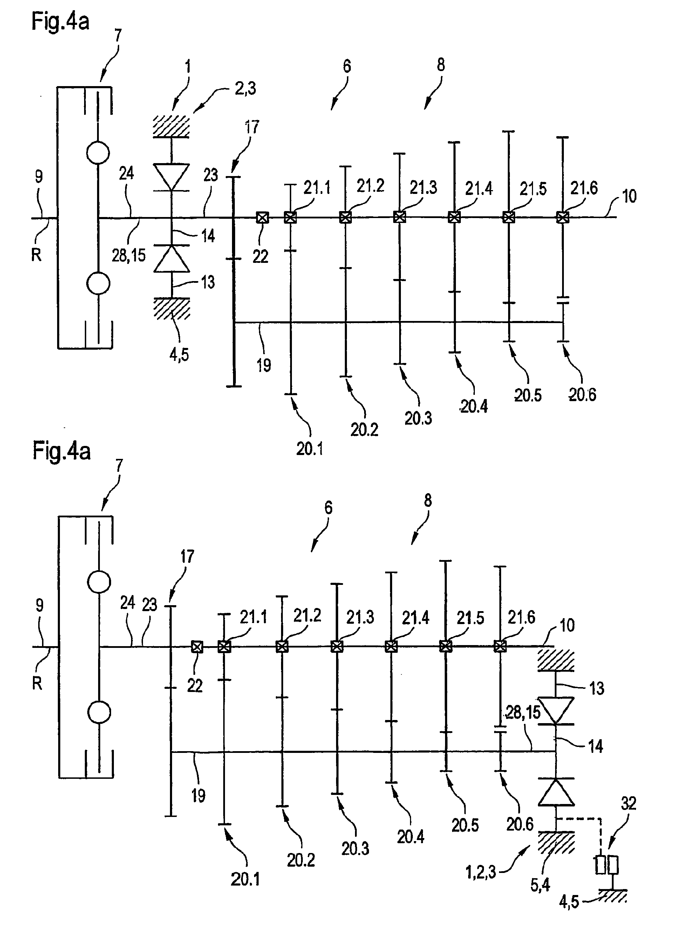

Die Figuren 4a und 4b verdeutlichen Beispiele einer möglichen Anordnung einer erfindungsgemäß vorgesehenen Rückrollverhinderungseinrichtung 1 in Form eines Freilaufes 2 als drehrichtungsgeschaltete Kupplung 3 in einer Leistungsübertragungseinheit 6. Die Leistungsübertragungseinheit 6 umfasst auch hier ein Anfahrelement 7 und ein Getriebe 8, wobei das Getriebe 8 in Vorgelegebauweise ausgeführt ist. Dieses umfasst dabei wenigstens ein erstes Vorgelege 17, welches in Leistungsflussrichtung vom Eingang 9 der Leistungsübertragungseinheit 6 betrachtet dem Anfahrelement 7 nachgeordnet ist und das über eine parallel zur Rotationsachse R des Anfahrelementes 7 angeordnete Vorgelegewelle 19 über weitere, die Schaltstufen realisierenden Vorgelege 20.1 bis 20.6 mit dem Ausgang 10 verbunden ist. Die einzelnen Vorgelege 20.1 bis 20.6 sind dabei je nach gewählter Gangstufe schaltbar, wobei dann immer eine drehfeste Verbindung zwischen dem ersten Vorgelege 17 und dem Ausgang 10 erfolgt. Den einzelnen Vorgelegen 20.1 bis 20.6 sind dazu entsprechende Schaltelemente 21.1 bis 21.6 zugeordnet. Diese können verschiedenartig ausgeführt sein, beispielsweise als schlupfbehaftete oder aber synchronschaltbare Kupplungen, wobei die Wirkverbindung der einzelnen Kupplungselemente durch Reibschluss, Kraftschluss oder Formschluss erfolgt.

Die Figuren 4a und 4b verdeutlichen dabei zwei mögliche Anordnungen, die unabhängig von der Ausgestaltung des Getriebes 8 mit Direktgang, d. h. mit Einstellungsmöglichkeit einer Übersetzung von 1:1, welcher durch die schaltbare Kupplung 22 zwischen dem ersten Vorgelege 17 und dem Ausgang 10 realisiert wird, geeignet sind. Bei beiden Anordnungen erfolgt dabei die Anordnung in jedem Fall im Leistungsfluss in der Leistungsübertragungseinheit 6 zwischen Anfahrelement 7 und Einrichtung zur Fahrtrichtungsumkehr unabhängig von der Art des gerade geschalteten Ganges. In der Figur 4a ist dabei die drehrichtungsgeschaltete Kupplung 3 mit dem Eingang 23 des Getriebes 8 bzw. dem Ausgang 24 des Anfahrelementes 7 verbunden. Demgegenüber ist die Figur 4b durch die Anordnung des Freilaufes 2, insbesondere der drehrichtungsgeschalteten Kupplung 3, zur Vorgelegewelle 19 charakterisiert, wobei je nach Zuordnung der schaltbaren Elemente 21.1 bis 21.6 zum Ausgang 10 bzw. einer mit diesem drehfest verbundenen Welle 18 die Anordnung des Freilaufes 2 an beliebiger Stelle unabhängig von der gewählten Schaltstufe erfolgen kann. Dies bedeutet, dass bei Zuordnung der einzelnen Schaltelemente 21.1 bis 21.6 zu den einzelnen Vorgelegen 20.1 bis 20.6 an dem mit dem Ausgang 10, insbesondere der Ausgangswelle 18 koppelbaren Element des jeweiligen Vorgeleges 20.1 bis 20.6 der Feilauf 2 an beliebiger Stelle der ersten Vorgelegewelle 17 zugeordnet werden kann. Bei der in der Figur 4b dargestellten Ausführung ist die als Freilauf 2 ausgeführte drehrichtungsgeschaltete Kupplung 3, in axialer Richtung betrachtet, hinter den einzelnen, die Schaltstufen charakterisierenden Vorgelege 20.1 bis 20.6, angeordnet. Sind die Schaltelemente 21.1 bis 21.6 den Schaltstufen 20.1 bis 20.6 bildenden Vorgelegen im Bereich der Kupplung dieser mit der Vorgelegewelle 19 zugeordnet, ist die Rückrollverhinderungseinrichtung 1 zwischen erstem Vorgelege 17 und den anderen Vorgelegen 20.1 bis 20.6 oder an beliebiger Stelle der Vorgelegewelle 19 angeordnet.

Die in den Figuren 4a und 4b dargestellten Ausführungen stellen besonders vorteilhafte Beispiele für die Anordnung einer Rückrollverhinderung, insbesondere einer drehrichtungsgeschalteten Kupplung 3, dar. Andere Anordnungsmöglichkeiten zwischen dem Ausgang 24 des Anfahrelementes 7 und vor der Einrichtung 12 zur Fahrtrichtungsumkehr sind ebenfalls denkbar. Wesentlich ist, dass zur Gewährleistung einer sicheren Rückrollverhinderung eine drehrichtungsgeschaltete Kupplung 3 in diesem Bereich zwischen Ausgang 24 des Anfahrelementes 7 und der Einrichtung 12 zur Fahrtrichtungsumkehr erfolgt, wobei die drehrichtungsgeschaltete Kupplung 3 derart ausgeführt ist, dass diese geeignet ist, im Traktionsbetrieb bei Leistungsübertragung vom Eingang zum Ausgang der Leistungsübertragungseinheit als Überholkupplung zu fungieren, d. h. keinerlei Momente aufzunehmen bzw. abzustützen und lediglich bei Einleitung eines Momentes vom Ausgang 10 der Leistungsübertragungseinheit 6 in das Getriebe 8 hinein, wie dies beim Zurückrollen am Berg der Fall wäre, aufgrund der Drehrichtungsumkehr eine Wirkverbindung zwischen den einzelnen Kupplungselementen 13, 14 herzustellen, die zur Abstützung eines Momentes an einem ortsfesten Bauteil 4 oder dem Gehäuse 5 führt. Dabei ist es unerheblich, ob diese Abstützung direkt durch Anlenkung eines der beiden in Wirkverbindung zu bringenden Kupplungselemente 13, 14 am ortsfesten Bauteil 4 oder Gehäuse 5 erfolgt oder aber indirekt, beispielsweise über eine, hier durch eine unterbrochene Linie angedeutete zusätzliche Bremseinrichtung 32, die das erste Kupplungselement 13 entsprechend auf eine Drehzahl von Null abbremst.

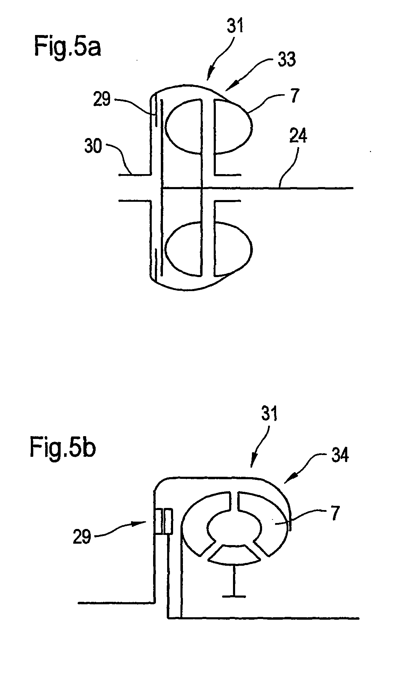

Die Ausgestaltung des Anfahrelementes kann, wie bereits ausgeführt, vielgestaltig erfolgen. Denkbar sind verschleißfreie Anfahrelemente in Form von hydrodynamischen Komponenten, beispielsweise hydrodynamischer Kupplungen 33 oder hydrodynamischer Drehzahl-/Drehmomentenwandler 34, wie in den Figuren 5a und 5b in vereinfachter Darstellung schematisch verdeutlicht. Ferner denkbar sind nass oder trocken laufende Reibkupplungen in Form von Scheibenkupplungen. Diese sind beispielhaft in den Anordnungen gemäß der Figuren 4a und 4b wiedergegeben. Andere Ausführungen der Kupplungen sind ebenfalls denkbar. Allen gemeinsam ist, dass das Anfahrelement 7 zusätzlich mit einer Einrichtung zur Überbrückung ausgerüstet sein kann. Diese Einrichtung 29 zur Überbrückung wird insbesondere den hydrodynamischen Komponenten zugeordnet und ist vorzugsweise parallel zu diesen angeordnet. Diese kann gemeinsam mit diesen oder aber für sich allein schaltbar sein. Die Überbrückung bewirkt dabei eine drehfeste Kopplung zwischen dem Eingang 30 des Anfahrelementes 7 und dem Ausgang 24 des Anfahrelementes 7. Die Einheit aus Anfahrelement 7 und Überbrückungseinrichtung 29 wird dann als Anfahreinheit 31 bezeichnet. Bezüglich der Anordnung der Rückrollverhinderung bedeutet dies, dass diese zumindest zwischen dem Ausgang 24 der Anfahreinheit 7 und der Einrichtung 12 zur Drehrichtungsumkehr angeordnet ist.

Für die konkrete konstruktive Ausgestaltung der drehrichtungsgeschalteten Kupplung 3, insbesondere der Mitnahmeelemente, bestehen eine Vielzahl von Möglichkeiten, die aus dem Stand der Technik hinlänglich bekannt sind. Auf diese wird daher an dieser Stelle nicht näher eingegangen.

Die erfindungsgemäße Anordnung eines Freilaufes zur Rückrollverhinderung ist nicht auf die Ausführungen der Leistungsübertragungseinheiten in den Figuren beschränkt. Die Leistungsübertragungseinheiten können dazu Getriebe unterschiedlichsten Aufbaus umfassen. Die Getriebe können in Vorgelegebauweise oder aber Planetenradgetriebe oder aber kombinierte Planetenrad-Stirnrad-Getriebe etc. ausgeführt sein.

### Bezugszeichenliste

- 1: Rückrollverhinderungseinrichtung
- 2: Freilauf
- 3: drehrichtungsgeschaltete Kupplung
- 4: ortsfestes Bauteil
- 5: Gehäuse
- 6: Leistungsübertragungseinheit
- 7: Anfahrelement
- 8: Getriebe
- 9: Eingang
- 10: Ausgang
- 11: Bereich
- 12: Einrichtung zur Fahrtrichtungsumkehr
- 13: erstes Kupplungselement
- 14: zweites Kupplungselement
- 15: im Leistungsfluss liegendes oder mit einem im Leistungsfluss liegenden Element drehfest gekoppeltes Element
- 16: Mittel zur Kopplung oder Entkopplung des Freilaufes vom Antriebstrang
- 17: erstes Vorgelege
- 18: Welle
- 19: Vorgelegewelle
- 20.1 bis 20.6: Vorgelege
- 21.1 bis 21.6: Schaltelemente
- 21.7: Schaltelement
- 22: schaltbare Kupplung
- 23: Eingang des Getriebes
- 24: Ausgang des Anfahrelementes
- 25: Antriebstrang
- 26: Fahrzeug
- 27: Räder
- 28: rotierendes Element
- 29: Einrichtung zur Überbrückung
- 30: Eingang des Anfahrelementes
- 31: Anfahreinheit
- 32: Bremseinrichtung
- 33: hydrodynamische Kupplung
- 34: hydrodynamische Drehzahl-/Drehmomentwandler

## Patentansprüche

1. Leistungsübertragungseinheit (6)
mit mindestens einem Eingang (9) und einem Ausgang (10);
mit einem zwischen Eingang (9) und Ausgang (10) angeordneten Anfahrelement (7) und einem diesem nachgeschalteten Getriebe (8), umfassend wenigstens eine Drehzahl-/Drehmomentenwandlungseinrichtung; mit einem Gehäuse (5);
mit einer Rückrollverhinderungseinrichtung (1), umfassend wenigstens einen als drehrichtungsgeschaltete Kupplung (3) ausgeführten Freilauf (2);
die drehrichtungsgeschaltete Kupplung (3) ist zwischen einem zumindest zeitweise ortsfestem Bauteil (4) oder dem Gehäuse (5) und einem rotierbaren leistungsübertragenden Element (28) oder einem mit diesem drehfest gekoppelten Element (15) zwischen dem Ausgang (24) des Anfahrelementes (7) und dem Ausgang (10) des Getriebes (8) angeordnet;
das Getriebe (8) umfasst eine Einrichtung (12) zur Fahrtrichtungsumkehr, **dadurch gekennzeichnet, dass** der Freilauf (2) in Leistungsübertragungsrichtung vom Eingang (9) zum Ausgang (10) der Leistungsübertragungseinheit (6) betrachtet vor der Einrichtung (12) zur Fahrtrichtungsumkehr angeordnet ist.

2. Leistungsübertragungseinheit (6) nach Anspruch 1, **dadurch gekennzeichnet, dass** der Freilauf (2) ein erstes Kupplungselement (13) umfasst, das mit dem zumindest zeitweise ortsfesten Bauteil (4) oder dem Gehäuse (5) wenigstens mittelbar verbunden ist und welches wenigstens mittelbar mit einem zweiten Kupplungselement (14) in Wirkverbindung bringbar ist, das drehfest mit einer zwischen dem Ausgang (24) des Anfahrelementes (7) gebildeten Welle oder einem rotationssymmetrischen Teil und dem Ausgang (10) der Leistungsübertragungseinheit (6) gebildeten Welle oder einem mit diesem drehfest gekoppelten Bauelement in Wirkverbindung bringbar ist.

3. Leistungsübertragungseinheit (6) nach einem der Ansprüche 1 oder 2,
**dadurch gekennzeichnet, dass** der Freilauf (2) derart ausgeführt ist, dass dieser geeignet ist, bei Leistungsübertragung vom Eingang (9) zum Ausgang (10) der Leistungsübertragungseinheit (6) bei Betrieb in der gewählten Fahrtrichtung als Überholkupplung zu fungieren und bei Betrieb entgegen der gewählten Fahrtrichtung als Kupplung, wobei die Kopplung mit einem zumindest zeitweise ortsfesten Bauteil (4) oder Gehäuse (5) erfolgt.

4. Leistungsübertragungseinheit (6) nach einem der Ansprüche 1 bis 3, **gekennzeichnet durch** die folgenden Merkmale:
das Getriebe (8) ist als Vorgelegetriebe ausgeführt;
das Vorgelegegetriebe umfasst ein erstes Vorgelege (17), dessen Eingang mit dem Ausgang (24) des Anfahrelementes (7) verbunden ist und dessen Ausgang über eine erste Vorgelegewelle (19) mit wenigstens einem weiteren, eine Schaltstufe charakterisierende Vorgelege (20.1 bis 20.6) verbunden ist, welches mit dem Ausgang (10) der Leistungseinheit (6) verbindbar ist.

5. Leistungsübertragungseinheit (6) nach Anspruch 4, **dadurch gekennzeichnet, dass** dem eine Schaltstufe charakterisierenden Vorgelege (20.1 bis 20.6) eine schaltbare Kupplung (21.1 bis 21.6) zur Realisierung einer drehfesten Verbindung des jeweiligen Vorgeleges (20.1 bis 20.6) mit dem Ausgang (10) der Leistungsübertragungseinheit (6) zugeordnet ist.

6. Leistungsübertragungseinheit (6) nach einem der Ansprüche 4 oder 5, **dadurch gekennzeichnet, dass** der Freilauf (2) in axialer Richtung betrachtet, vor dem ersten Vorgelege (17) angeordnet ist.

7. Leistungsübertragungseinheit (6) nach einem der Ansprüche 4 bis 6, **dadurch gekennzeichnet, dass** der Freilauf (2) zwischen der ersten Vorgelegewelle (19) und einem ortsfesten Bauelement (4) oder dem Gehäuse (5) angeordnet ist.

8. Leistungsübertragungseinheit (6) nach einem der Ansprüche 4 bis 7, **dadurch gekennzeichnet, dass** der Freilauf (2) in Leistungsübertragungsrichtung vor einem, die einzelnen Schaltstufen charakterisierenden Vorgelege (20.1 bis 20.6) zwischen einem rotierenden Element (15) und dem Gehäuse (5) oder ortsfesten Bauteil (4) angeordnet ist.

9. Leistungsübertragungseinheit (6) nach einem der Ansprüche 4 bis 8, **dadurch gekennzeichnet, dass** der Freilauf (2) in Leistungsübertragungsrichtung vom Eingang (9) zum Ausgang (10) betrachtet in axialer Richtung hinter den einzelnen, die Schaltstufen charakterisierenden Vorgelegen (20.1 bis 20.6) zwischen einem rotierenden Element (15) und dem Gehäuse (5) oder ortsfesten Bauteil (4) angeordnet ist.

10. Leistungsübertragungseinheit (6) nach einem der Ansprüche 1 bis 9, **dadurch gekennzeichnet, dass** der Freilauf (2) zwischen dem den Ausgang (10) der Leistungsübertragungseinheit (6) gebildeten Element und dem Gehäuse (5) angeordnet ist.

11. Leistungsübertragungseinheit (6) nach einem der Ansprüche 1 bis 10, **dadurch gekennzeichnet, dass** das Anfahrelement (7) als kraftschlüssige Kupplung ausgeführt ist.

12. Leistungsübertragungseinheit (6) nach Anspruch 11, **dadurch gekennzeichnet, dass** die kraftschlüssige Kupplung als nass laufende oder trocken laufende Lamellenkupplung ausgeführt ist.

13. Leistungsübertragungseinheit (6) nach einem der Ansprüche 1 bis 12, **dadurch gekennzeichnet, dass** das Anfahrelement (7) als hydrodynamische Komponente, umfassend mindestens ein Primärschaufelrad und ein Sekundärschaufelrad, ausgebildet ist.

14. Leistungsübertragungseinheit (6) nach Anspruch 13, **dadurch gekennzeichnet, dass** der hydrodynamische Komponente eine Einrichtung (29) zur Überbrückung zugeordnet ist, die das Primärschaufelrad mit dem Sekundärschaufelrad drehfest koppelt, wobei das Anfahrelement (7) und die Überbrückungseinrichtung (29) eine Anfahreinheit (31) bilden.

15. Leistungsübertragungseinheit (6) nach einem der Ansprüche 1 bis 14, **dadurch gekennzeichnet, dass** der Freilauf (2) schaltbar ausgeführt ist.

16. Leistungsübertragungseinheit (6) nach Anspruch 15, **dadurch gekennzeichnet, dass** dem Freilauf (2) eine Einrichtung (16) zur Kopplung oder Entkopplung zugeordnet ist, die in der Verbindung des ersten Kupplungselementes (13) mit dem ortsfesten Bauelement (4) oder dem Gehäuse (5) angeordnet ist.

17. Leistungsübertragungseinheit (6) nach Anspruch 15, **dadurch gekennzeichnet, dass** der Freilauf eine Einrichtung (16) zur Kopplung oder Entkopplung umfasst, die in der Verbindung zwischen zweitem Kupplungselement (14) und dem im Leistungsfluss zwischen Anfahrelement (7) und Einrichtung zur Fahrtrichtungsumkehr liegenden bzw. rotierenden Bauelement (28, 15) angeordnet ist.

## Claims

1. A power transmission unit (6), comprising at least one input (9) and one output (10), a start element (7) which is arranged between input (9) and output (10) and a gear unit (8) which is mounted downstream therefrom, provided with at least one speed/torque converting device, a housing (5), a rollback prevention device (1), comprising at least one free-wheel (2) embodied as a coupling (3) which is switched in the direction of rotation, the coupling (3) which is switched in the direction of rotation is arranged between an at least temporarily stationary component (4) or the housing (5) and a rotatable power transmitting element (28) or an element (15) is coupled in a torsionally rigid manner with the same between the output (24) of the start element (7) and the output (10) of the gear unit (8), the gear unit (8) comprises a device (12) for reversing the direction of travel, **characterized in that** the free-wheel (2), when seen in the direction of power transmission from the input (9) to the output (10), is arranged before the device (12) for reversing the direction of travel.

2. A power transmission unit (6) according to claim 1, **characterized in that** the free-wheel (2) comprises a first coupling element (13) which is connected at least indirectly with the at least temporarily stationary component (4) or the housing (5) and which can be brought at least indirectly into operative connection with a second coupling element (14) which can be brought into operative connection in a torsionally rigid manner with a shaft formed between the output (24) of the start element (7) or a shaft formed between the rotationally symmetrical part and the output (10) of the power transmission unit (6) or a component which is coupled in a torsionally rigid manner with the same.

3. A power transmission unit (6) according to one of the claims 1 or 2, **characterized in that** the free-wheel (2) is arranged in such a way that it is suitable to act as an overrunning clutch in the chosen direction of travel in the case of power transmission from input (9) to output (10) of the power transmission unit (6) and, in the case of operation against the chosen direction of travel, as a coupling, with the coupling occurring with an at least temporarily stationary component (4) or housing (5).

4. A power transmission unit (6) according to one of the claims 1 to 3, **characterized by** the following features:
the gear unit (8) is arranged as a transfer box gearing which comprises a first countershaft transmission (17) whose input is connected with the output (24) of the start element (7) and whose output is connected via a first countershaft (19) with at least one further countershaft transmission (20.1 to 20.6) which characterizes a shift step and can be connected with the output (10) of the power unit (6).

5. A power transmission unit (6) according to claim 4, **characterized in that** the countershaft transmission (20.1 to 20.6) which characterizes a shift step is associated with a switchable coupling (21.1 to 21.6) for realizing a torsionally rigid connection of the respective countershaft transmission (20.1 to 20.6) with the output (10) of the power transmission unit (6).

6. A power transmission unit (6) according to one of the claims 4 or 5, **characterized in that** the free-wheel (2), when seen in the axial direction, is arranged before the first countershaft transmission (17).

7. A power transmission unit (6) according to one of the claims 4 to 6, **characterized in that** the free-wheel (2) is arranged between the first countershaft (19) and a stationary component (4) or the housing (5).

8. A power transmission unit (6) according to one of the claims 4 to 7, **characterized in that** the free-wheel (2) is arranged in the direction of power transmission between a rotating element (15) and the housing (5) or the stationary component (4) before a countershaft transmission (20.1 to 20.6) characterizing the individual shift steps.

9. A power transmission unit (6) according to one of the claims 4 to 8, **characterized in that** the free-wheel (2) is arranged in the direction of power transmission as seen from the input (9) to the output (10) in the axial direction between a rotating element (15) and the housing (5) or the stationary component (4) behind the individual countershaft transmissions (20.1 to 20.6) characterizing the individual shift steps.

10. A power transmission unit (6) according to one of the claims 1 to 9, **characterized in that** the free-wheel (2) is arranged between the element forming the output (10) of the power transmission unit (6) and the housing (5).

11. A power transmission unit (6) according to one of the claims 1 to 10, **characterized in that** the start element (7) is arranged as non-positive clutch.

12. A power transmission unit (6) according to claim 11, **characterized in that** the non-positive coupling is arranged as a wet-running or dry-running multiple-disk clutch.

13. A power transmission unit (6) according to one of the claims 1 to 12, **characterized in that** the start element (7) is arranged as a hydrodynamic element, comprising at least one primary blade wheel and one secondary blade wheel.

14. A power transmission unit (6) according to claim 13, **characterized in that** the hydrodynamic component is associated with a device (29) for bridging which couples the primary blade wheel with the secondary blade wheel in a torsionally rigid manner, with the start element (7) and the bridging device (29) forming a start unit (31).

15. A power transmission unit (6) according to one of the claims 1 to 14, **characterized in that** the free-wheel (2) is arranged to be switchable.

16. A power transmission unit (6) according to claim 15, **characterized in that** the free-wheel (2) is associated with a device (16) for coupling or uncoupling which is arranged in the connection of the first coupling element (13) with the stationary component (4) or the housing (5).

17. A power transmission unit (6) according to claim 15, **characterized in that** the free-wheel comprises a device (16) for coupling or uncoupling which is arranged in the connection between the second coupling element (14) and the component (28, 15) disposed or rotating in the power flow between the start element (7) and the device for reversing the direction of travel.

## Revendications

1. Unité de transmission de puissance (6)
avec au moins une entrée (9) et une sortie (10) ;
avec un élément démarreur (7) disposé entre l'entrée (9) et la sortie (10) et une boîte de vitesses (8) montée derrière celui-ci, comprenant au moins un dispositif de conversion vitesse-couple ;
avec un carter (5) ;
avec un dispositif empêchant la dérive en arrière (1), comprenant au moins une roue libre (2) réalisée sous la forme d'un accouplement à inversion de sens de rotation (3) ;
l'accouplement à inversion de sens de rotation (3) est disposé entre un élément stationnaire au moins une partie du temps (4) ou le carter (5) et un élément transmettant la puissance capable de rotation (28) ou un élément (15) couplé avec celui-ci de manière solidaire en rotation entre la sortie (24) de l'élément démarreur (7) et la sortie (10) de la boîte de vitesses (8) ;
la boîte de vitesses (8) comprend un dispositif (12) pour l'inversion du sens de la marche,
**caractérisée en ce que** la roue libre (2) est disposée avant le dispositif (12) pour l'inversion du sens de la marche dans le sens de transmission de la puissance de l'entrée (9) à la sortie (10) de l'unité de transmission de puissance (6).

2. Unité de transmission de puissance (6) selon la revendication 1, **caractérisée en ce que** la roue libre (2) comprend un premier élément d'accouplement (13) qui est relié au moins indirectement avec l'élément stationnaire au moins une partie du temps (4) ou le carter (5) et qui peut être amené au moins indirectement en liaison active avec un deuxième élément d'accouplement (14) qui peut être amené en liaison active avec un arbre formé entre la sortie (24) de l'élément démarreur (7) ou une pièce symétrique en rotation et la sortie (10) de l'unité de transmission de puissance (6) ou avec un élément couplé de manière solidaire en rotation avec celui-ci.

3. Unité de transmission de puissance (6) selon l'une des revendications 1 ou 2, **caractérisée en ce que** la roue libre (2) est réalisée de telle manière qu'elle peut, quand la puissance est transmise de l'entrée (9) à la sortie (10) de l'unité de transmission de puissance (6), servir d'accouplement de rattrapage pendant le fonctionnement dans le sens de marche choisi ou d'embrayage pendant le fonctionnement en sens inverse du sens de marche choisi, l'accouplement étant réalisé avec un élément stationnaire au moins une partie du temps (4) ou le carter (5).

4. Unité de transmission de puissance (6) selon l'une des revendications 1 à 3, **caractérisée en ce que** :
la boîte de vitesses (8) est conçu comme une boîte de vitesses à renvoi ;
la boîte de vitesses à renvoi comprend un premier renvoi (17) dont l'entrée est reliée à la sortie (24) de l'élément démarreur (7) et dont la sortie peut être reliée par un premier arbre intermédiaire (19) à au moins un autre renvoi (20.1 à 20.6) caractérisant un rapport, qui peut être relié à la sortie (10) de l'unité de puissance (6).

5. Unité de transmission de puissance (6) selon la revendication 4, **caractérisée en ce que** le renvoi caractérisant un rapport (20.1 à 20.6) est associé à un accouplement embrayable (21.1 à 21.6) pour réaliser une liaison solidaire en rotation du renvoi (20.1 à 20.6) en question avec la sortie (10) de l'unité de transmission de puissance (6).

6. Unité de transmission de puissance (6) selon l'une des revendications 4 ou 5, **caractérisée en ce que** la roue libre (2) est disposée, vue dans le sens axial, avant le premier renvoi (17).

7. Unité de transmission de puissance (6) selon l'une des revendications 4 à 6, **caractérisée en ce que** la roue libre (2) est disposée entre le premier arbre intermédiaire (19) et un composant stationnaire (4) ou le carter (5).

8. Unité de transmission de puissance (6) selon l'une des revendications 4 à 7, **caractérisée en ce que** la roue libre (2) est disposée, dans le sens de transmission de la puissance, avant un renvoi caractérisant un rapport (20.1 à 20.6) entre un élément en rotation (15) et le carter (5) ou le composant stationnaire (4).

9. Unité de transmission de puissance (6) selon l'une des revendications 4 à 8, **caractérisée en ce que** la roue libre (2) est disposée, vue dans le sens de transmission de la puissance de l'entrée (9) à la sortie (10), derrière les différents renvois caractérisant un rapport (20.1 à 20.6) dans le sens axial, entre un élément en rotation (15) et le carter (5) ou le composant stationnaire (4).

10. Unité de transmission de puissance (6) selon l'une des revendications 1 à 9, **caractérisée en ce que** la roue libre (2) est disposée entre l'élément formant la sortie (10) de l'unité de transmission de puissance (6) et le carter (5).

11. Unité de transmission de puissance (6) selon l'une des revendications 1 à 10, **caractérisée en ce que** l'élément démarreur (7) est réalisé comme un accouplement à friction.

12. Unité de transmission de puissance (6) selon la revendication 11, **caractérisée en ce que** l'accouplement à friction est réalisé comme un accouplement à disques multiples fonctionnant avec un liquide ou à sec.

13. Unité de transmission de puissance (6) selon l'une des revendications 1 à 12, **caractérisée en ce que** l'élément démarreur (7) est réalisé comme un composant hydrodynamique comprenant au moins une roue à aubes primaire et une roue à aubes secondaire.

14. Unité de transmission de puissance (6) selon la revendication 13, **caractérisée en ce que** le composant hydrodynamique comprend un dispositif de dérivation (29) qui couple la roue à aubes primaire et la roue à aubes secondaire de manière solidaire en rotation, l'élément démarreur (7) et le dispositif de dérivation (29) formant une unité de démarreur (31).

15. Unité de transmission de puissance (6) selon l'une des revendications 1 à 14, **caractérisée en ce que** la roue libre (2) est réalisée de façon à être embrayable.

16. Unité de transmission de puissance (6) selon la revendication 15, **caractérisée en ce que** la roue libre (2) est associée à un dispositif (16) de couplage ou de découplage qui est disposé dans la liaison du premier élément d'accouplement (13) au composant stationnaire (4) ou au carter (5).

17. Unité de transmission de puissance (6) selon la revendication 15, **caractérisée en ce que** la roue libre comprend un dispositif (16) pour le couplage ou le découplage qui est disposé dans la liaison entre le deuxième élément d'accouplement (14) et le composant (28, 15) placé ou tournant dans le flux de puissance entre l'élément démarreur (7) et le dispositif pour l'inversion du sens de la marche.
